# EUROPEAN PATENT APPLICATION

(11) **EP 4 679 678 A1**
(43) Date of publication of application: **14.01.2026**
(21) Application number: 25188272.6
(22) Date of filing: 08.07.2025
(51) Int. Cl.: H02K 1/278, H02K 1/2791, H02K 15/035

(54) **ROTOR FOR A MOTOR OF THE SPM TYPE AND METHOD FOR MANUFACTURE OF A ROTOR**

(30) Priority: 10.07.2024 IT 202400015892
(71) Applicant: SICOR ITALY S.r.l., 38068 Rovereto (TN) (IT)
(72) Inventor: Chemello, Marco, 38068 Rovereto (Trento) (IT); Rizzo, Federico, 38068 Rovereto (Trento) (IT); Grandi, Stefano, 38068 Rovereto (Trento) (IT); Coenen, Jan, 38068 Rovereto (Trento) (IT)
(74) Representative: Anselmi, Davide

(57) **Abstract**

A rotor (10) for a motor of the SPM type comprises a main body (20) configured to rotate around its own rotation axis (A) and having a substantially circular conformation; a plurality of housing seats (30) obtained along a perimeter of the main body (20) turned towards a stator of the motor to receive a corresponding plurality of magnets (M); a plurality of lateral retention devices arranged along the perimeter and interspersed with the housing seats (30) to delimit them laterally. The lateral retention devices comprise deformable elements (40) configured to be able to be deformed plastically between an initial position, in which a magnet (M) is freely insertable into or removable from the corresponding housing seat (30), and a locking position, in which at least said deformable elements (40) are configured to constrain a magnet (M) inside the corresponding housing seat (30) through mechanical interference. The present invention also relates to a method for manufacture of a rotor (10) for a motor of the SPM type.

## Description

### Technical field

The present invention relates to a rotor for a motor of the SPM type, i.e. a surface permanent magnet synchronous motor.

The invention also relates to a method for manufacture of a rotor for a motor of the SPM type.

### Prior art

Synchronous motors are electric motors that operate on alternating current and the rotation speed of which is synchronised with the electrical frequency.

Generally speaking, a synchronous motor is formed of a rotor mounted solidly constrained to the transmission shaft and on which various magnetic poles (permanent magnets or electromagnets powered with alternating current) with alternate polarity are present, and also of a stator on which the windings of the power supply circuit are present. The windings inserted into the slots of the stator create a rotating magnetic field which, by interacting with the magnetic flow produced by the magnets, drags the rotor to induce, as a direct consequence, rotation of the transmission shaft.

In particular, the magnetic poles of synchronous motors of the SPM types are obtained by means of magnets positioned on the surface of the rotor itself and, therefore, directly facing the separation zone between the rotor and the stator, without the interposition of other magnetic materials. This arrangement of the magnets is peculiar to this type of synchronous motors and is distinctive with respect to other possible types.

Until now, particularly in the case in which the magnetic poles of the rotor are obtained by means of permanent magnets, the solutions for producing it, i.e. through the installation of permanent magnets, are substantially the following:
- gluing of the magnets to the surface of the rotor;
- insertion of additional interlocking or screw-on components;
- external wrapping of the rotor with fibre tapes;
- "jacketing" with a non-magnetic tube with slight interference.

However, the solutions just described are not free of drawbacks.

Gluing necessarily requires an optimal cleaning treatment on the surfaces and lengthy production times, due to the time needed for polymerisation of the glue used. Attachment by means of screwing or other external elements with a covering jacket makes it necessary to produce and/or recover and/or actuate a higher number of elements and/or steps, thus complicating the general complexity of the rotor.

**In** particular, in addition to complicating production, both the external wrapping and the jacket require a sufficiently wide air gap to guarantee the space for the additional material, with a consequent reduction in performance.

### Summary

In this context, the technical task underpinning the present invention is to produce a rotor for a motor of the SPM type and a method for manufacture of a rotor for a motor of the SPM type that overcome the aforementioned drawbacks of the prior art.

In particular, an object of the present invention is to provide a rotor for a motor of the SPM type that does not require the use of glues, chemical components, additional interlocking components, additional deformable components and/or additional screwed-on elements for fixing the magnets onto the outer surface of the rotor. Another object of the present invention is to provide a rotor for a motor of the SPM type that has a lower number of components necessary for fixing of the permanent magnets. Therefore, in detail, the object of the invention is not to introduce further elements that could significantly change the magnetic field lines and/or are capable of allowing the formation of eddy currents such as to reduce the efficiency of the motor.

A further object of the present invention is to provide a method for manufacture of a rotor for a motor of the SPM type that is simpler and requires shorter assembly times than those in the prior art.

The stated technical task and specified objects are substantially achieved by a rotor for a motor of the SPM type and a method for manufacture of a rotor for a motor of the SPM type which comprise the technical features disclosed in the respective independent claims. The dependent claims correspond to further advantageous aspects of the invention.

It should be noted that this summary introduces a selection of concepts in simplified form, which will be further elaborated on in the detailed description provided below.

The invention relates to a rotor for a motor of the SPM type that comprises a main body configured to rotate around its own rotation axis and having a substantially circular conformation, a plurality of housing seats obtained along a perimeter of the main body turned towards a stator of the motor to receive a corresponding plurality of magnets, a plurality of magnets arranged in the housing seats, and a plurality of lateral retention devices arranged along the perimeter and interspersed with the housing seats to delimit them laterally. In particular, the lateral retention devices comprise deformable elements configured to be able to be bent plastically between an initial position, in which a magnet is freely insertable into or removable from the corresponding housing seat, and a locking position, in which at least the deformable elements are configured to constrain a magnet inside the corresponding housing seat through mechanical interference.

Advantageously, therefore, the housing seats of the magnets are obtained directly on the outer surface of the rotor facing the stator, so as to obtain the aforesaid surface permanent magnet motor, i.e. the "SPM" motor.

Even more advantageously, the side walls of each housing seat, defined by the retention devices, are plastically deformable in order to be positioned at least partly converging in the direction of the stator, i.e. at least partly above said housing seat that they delimit laterally, so as to obtain the mechanical retention in position of the corresponding magnet.

The present invention also relates to a method for manufacture of a rotor for a motor of the SPM type that comprises the steps of:
- preparing a main body of a rotor configured to rotate around its own rotation axis and having a substantially circular conformation. The main body has a plurality of housing seats obtained along a perimeter thereof turned towards a stator of the motor to receive a corresponding plurality of magnets. The main body also comprises a plurality of lateral retention devices arranged along the same perimeter in order to be interspersed with the housing seats to delimit them laterally. In addition, the lateral retention devices comprise deformable elements normally configured in an initial position, in which a magnet is freely insertable into or removable from the corresponding housing seat;
- preparing a magnet in a respective housing seat;
- imparting with a specific tool a pressing force against the deformable elements adjacent to the magnet in the housing seat, so as to deform the shape thereof plastically from the initial position to a locking position to constrain the aforesaid magnet inside the housing seat through mechanical interference.

In other words, the housing seats of the magnets of the rotor are obtained directly on the surface of the rotor facing the stator, to obtain the surface permanent magnet motor, i.e. the "SPM" motor.

After at least one magnet has been positioned in the respective housing seat, the aforesaid method provides for plastically deforming the lateral retention devices that laterally define the aforesaid housing seat - and therefore that laterally delimit the aforesaid magnet - so as to guarantee mechanical locking of the magnet in a stable position on the surface of the rotor facing the stator.

Advantageously, the use of a specific tool that allows the deforming of each deformable element from the initial position, in which it does not produce any interference with the magnet - which can therefore be freely inserted into/removed from the respective housing seat - and the locking position in which, due to plastic deformation, it tends to converge at least partly in the direction of the stator and, therefore, above the housing seat in order to abut against a portion of the magnet in order to constrain it in position. Advantageously, the method can be replicated a variable number of times, based on the number of magnets that must be constrained onto the motor.

Even more advantageously, the method can provide first for the step of positioning the magnets and then for the step of plastic deformation of the deformable elements, or the repetition - for each magnet to be applied to the rotor - of the step of positioning a magnet and the locking in position thereof through deformation of the corresponding deformable element.

An addition, in accordance with a further advantageous aspect of the invention, the method for manufacture of the rotor is applicable both to magnets that have already been magnetised and those to be magnetised after their assembly.

### Brief description of the drawings

Further features and advantages of the present invention will become more apparent from the indicative and thus non-limiting description of a preferred, but not exclusive, embodiment of a rotor for a motor of the SPM type, as illustrated in the appended drawings, in which:
- Figure 1a illustrates, according to a perspective view, a first embodiment of a rotor for a surface permanent magnet synchronous motor of the SPM type;
- Figure 1b illustrates, according to a front view, a detail of the rotor illustrated in Figure 1a;
- Figure 2a illustrates, according to a perspective view, a second embodiment of a rotor for a surface permanent magnet synchronous motor of the SPM type;
- Figure 2b illustrates, according to a front view, a detail of the rotor illustrated in Figure 2a;
- Figures 3a and 3b illustrate a further embodiment of a rotor for a surface permanent magnet synchronous motor of the SPM type;
- Figures 4a to 4c illustrate, according to a front view, a schematisation of the steps for manufacture of the rotor in accordance with the method of the present invention;
- Figures 5a and 5b illustrate, according to a perspective view, further aspects of the rotors illustrated, respectively, in Figures 1a and 3b, but also applicable to the other embodiments.

With reference to the drawings, they serve solely to illustrate embodiments of the invention for the purpose of better clarifying, in combination with the description, the inventive principles at the basis of the invention.

### Detailed description of at least one embodiment

The present invention relates to a rotor for a motor of the SPM type which, with reference to the figures, has been generally indicated with the number 10.

Any modifications or variants which, in light of the description, should be evident to the person skilled in the art, must be considered as falling within the scope of protection established by the present invention, according to considerations of technical equivalence.

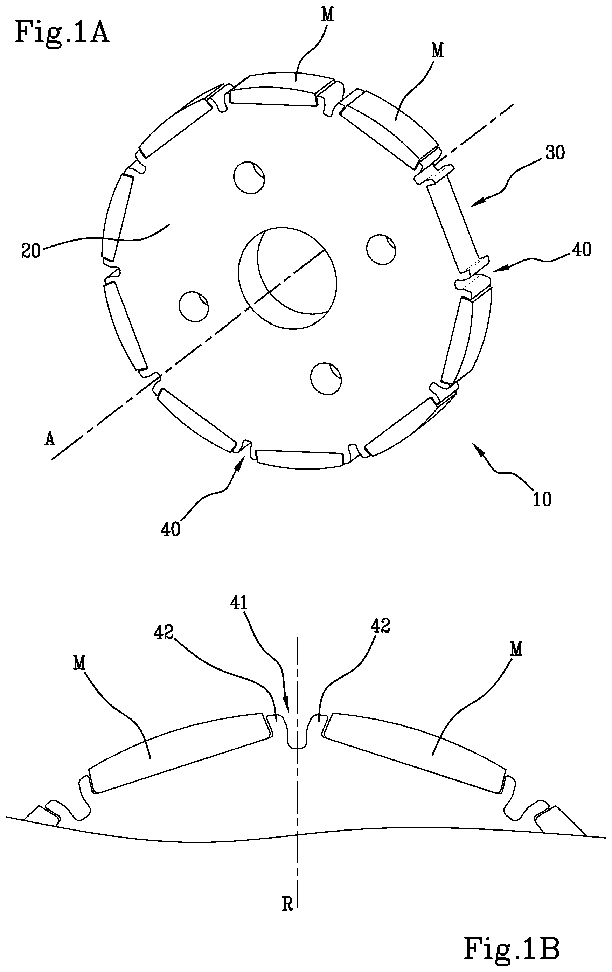

Figures 1a and 1b show a first embodiment of a rotor 10 for a surface permanent magnet synchronous motor of the SPM type. More precisely, Figure 1b illustrates, in greater detail, an aspect of the rotor illustrated in Figure 1a according to a perspective view.

In detail, the rotor 10 comprises a main body 20 configured to rotate around its own rotation axis A and having a substantially circular conformation. In other words, the main body 20 has a substantially cylindrical conformation and has, at its centre, a circular hole to allow an easy insertion of a transmission shaft of an SPM motor.

The rotor 10 also comprises a plurality of housing seats 30 obtained along a perimeter of the main body 20 turned towards a stator of the motor to receive a corresponding plurality of magnets M. The magnets M are arranged, at least partially, in the housing seats 30, which are therefore obtained on the surface of the rotor 10 which, in use, is facing towards the SPM motor.

In addition, the rotor 1 comprises a plurality of lateral retention devices arranged along the perimeter and interspersed with the housing seats 30 to delimit them laterally. In particular, the lateral retention devices comprise deformable elements 40 configured to be able to be deformed plastically between an initial position, in which a magnet M is freely insertable into or removable from the corresponding housing seat 30, and a locking position, in which at least the deformable elements 40 are configured to constrain a magnet M inside the corresponding housing seat 30 through mechanical interference.

Advantageously, therefore, the housing seats 30 of the magnets M are obtained directly on the outer surface of the rotor facing the stator, so as to obtain the aforesaid surface permanent magnet motor, i.e. the "SPM" motor.

Even more advantageously, the side walls of each housing seat 30, defined by the retention devices, are plastically deformable in order to be positioned at least partly converging in the direction of the stator - i.e. at least partly above said housing seat 30 that they delimit laterally - so as to obtain the mechanical retention in position of the corresponding magnet M.

In other words, the rotor 10 thus advantageously has no additional elements configured to maintain the deformable elements 40 in the locking position and that - said additional elements - could significantly change the magnetic field lines and/or form eddy currents such as to reduce the efficiency of the motor. For example, in contrast with the prior art, the rotor in accordance with the present invention does not require metal bars to be positioned at the deformable elements 40 to maintain them in the locking position.

In accordance with a preferred aspect of the invention, the lateral retention devices and the main body 20 are made in a single piece.

In this manner, the structure of the rotor is advantageously capable of resisting the mechanical stresses to which it is subjected during normal use of the rotor 10 inside the corresponding SPM motor.

In addition, even more advantageously, the lateral retention devices define a single piece with the main body of the rotor 20, simplify the operations for manufacture of the rotor 10 and the corresponding SPM motor and, furthermore, are sufficiently sturdy to maintain each magnet M in position inside the corresponding housing seat 30.

In accordance with an aspect of the invention, each deformable element 40 in the locking position is configured to extend, at least in part, above a housing seat 30 adjacent to it, so as to retain the corresponding magnet M contained inside it in position through mechanical interference.

In other words, in the locking position, at least one portion of each deformable element 40 is projected above the adjacent housing seat 30 so as to be superimposed on at least one portion of the corresponding magnet M, so as to obtain a mechanical interference capable of maintaining said magnet M firmly in position inside said housing seat 30.

Advantageously, the application of a pressing force - substantially along a radial direction R to the main body 20 and, therefore, transverse with respect to the rotation axis A - allows deformation of the deformable elements 40 along a substantially tangential direction to the perimeter, so as to bring them from the initial position into the locking position and, therefore, constrain the magnet M inside the respective housing seat 30.

In accordance with another aspect of the invention more clearly visible in Figure 1b, each deformable element 40 has a central depression 41 adapted to define two plastically flexible lateral protrusions 42 extending, in the initial position, substantially along a corresponding radial direction R passing through the rotation axis A of the main body 20.

In this manner, advantageously, in the case of a pressing force being applied against each deformable element 40 with a specific tool U, for example a punching wedge, the respective lateral protrusions 42 are plastically flexed towards the respective housing seat 30 so that they define a lateral portion.

Therefore, with a single operation, it is advantageously possible to simultaneously deform two lateral protrusions 42 at the same time and, therefore, to constrain two magnets M simultaneously inside the respective housing seats 30 through plastic flexing of the aforesaid two lateral protrusions 42 in their locking position, in which they are superimposed, at least in part, with a lateral portion of the magnet M, in order to obtain mechanical interference.

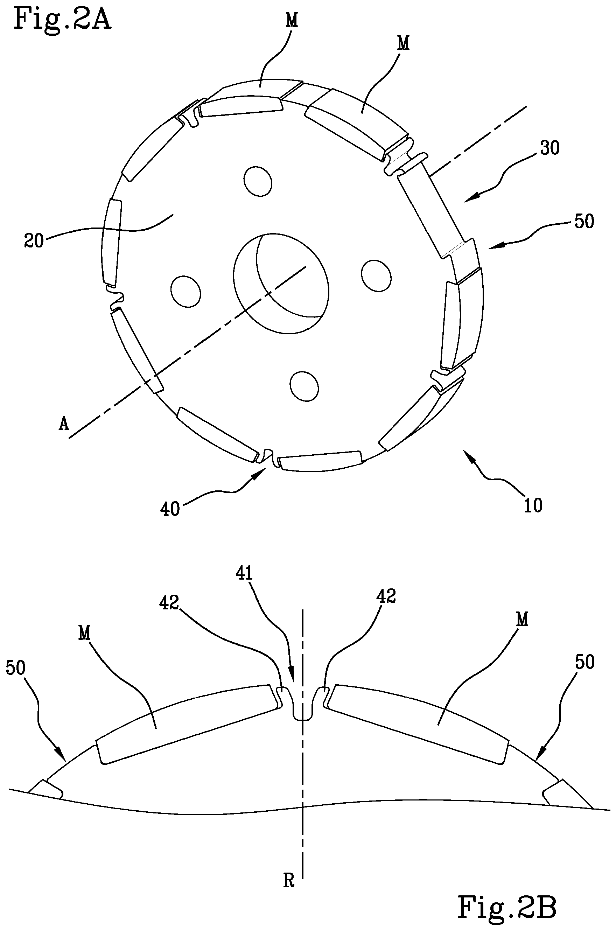

Figures 2a and 2b show a second embodiment of a rotor 10 for a surface permanent magnet synchronous motor of the SPM type that comprises one or more of the previous features described in relation to the rotor illustrated in Figures 1a and 1b. More precisely, Figure 2b illustrates, in greater detail, an aspect of the rotor illustrated in Figure 2a according to a perspective view.

In particular, the rotor 10 illustrated in Figures 2a and 2b has lateral retention devices that comprise, in addition to the aforesaid deformable elements 40, also rigid elements 50 adapted to define a lateral abutment for the magnets arranged in the respective housing seats 30.

Advantageously, the rigid elements 50 define abutment elements which are sturdier and therefore improve the structural resistance of the rotor 10.

Even more advantageously, the arrangement of the rigid elements 50 alternating with the deformable elements 40 allows a reduction, substantially a halving, of the plastic deformation operations, for example punching, which must be performed on the deformable elements 40 to constrain the magnets M in the respective housing seats 30.

Preferably, the rigid elements 50 and the deformable elements 40 are arranged alternating along the perimeter of the main body 20 of the rotor 10.

In this manner, in addition, it is possible to perform the plastic deformation operations on the deformable elements 40 at different moments and not necessarily all simultaneously with each other, as in the case in which the lateral retention devices comprise only deformable elements 40.

In this manner, a rigid element 50 is capable of acting as the side wall for two adjacent housing seats 30. The side walls of such housing seats 30 opposite the rigid element are consequently defined by deformable elements 40. Therefore, similarly to the rigid element 50, such deformable elements 40 act as the side wall for two adjacent housing seats 30.

Advantageously, therefore, plastic deformation of a deformable element 40 allows two magnets M to be simultaneously constrained in the respective housing seats 30.

In accordance with an aspect of the invention better illustrated in Figure 2b, the rigid elements 50 have a trapezoidal transverse section with respect to the rotation axis A, so as to extend, at least in part, above each housing seat 30 to which they are adjacent. Advantageously, the rigid elements 50 have a conformation useful for defining a gap in which a duly counter-shaped portion of magnet M is able to abut. Fixing of the magnet M in the housing seat 30 is therefore delegated solely to the plastic deformation of the opposing deformable element 40.

In accordance with a possible aspect of the invention, the rigid elements 50 have a height substantially equal to the one of the magnets M.

In accordance with an aspect of the invention, independently of the presence or absence of rigid elements 50, the housing seats 30 have the same extension along the perimeter of the main body 20.

In other words, given that the magnets M are equivalent to each other, the housing seats 30 are equal to each other, so as to be able to allow interchangeability of the magnets M.

Preferably, the housing seats 30 are arranged radially at equal distance along the perimeter of the main body 20.

In this manner, distribution of the magnets M along the perimeter of the main body 20 is balanced to obtain a symmetrical, and therefore more high-performing, rotor 10.

Alternatively, the magnets M can be distributed along the main body 20 with a variable and opportunely predetermined spacing, in order, for example, to avoid any cogging torque problems that could afflict the relative SPM motor on which the rotor 10 is mounted.

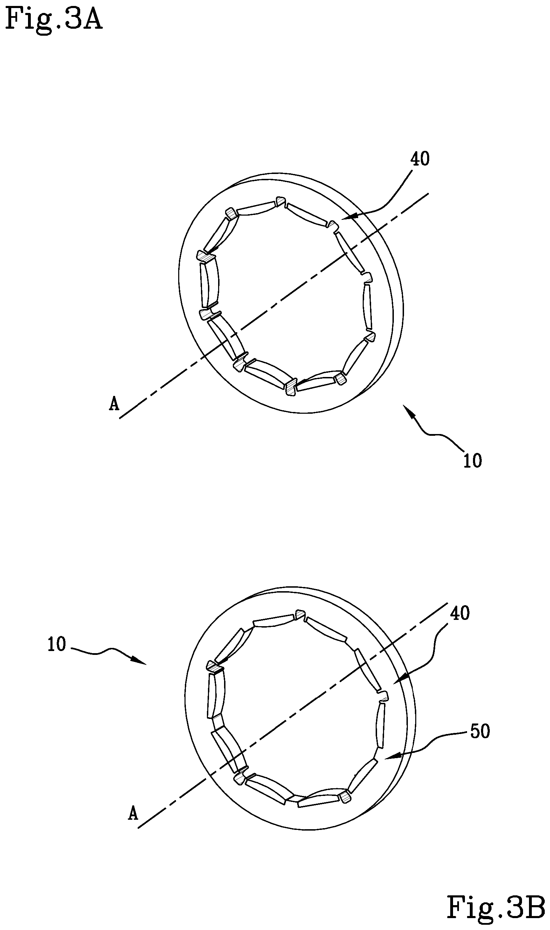

Figures 3a and 3b illustrate a further embodiment of a rotor 10 for a surface permanent magnet motor with external rotor, i.e. an "SPM" motor.

In accordance with such embodiment, the main body 20 of the rotor 10 has a more annular conformation - i.e., with a central hole having a larger diameter than in the previous embodiments - as such rotor 10 is positioned externally to the stator, which is therefore located at the centre of the aforesaid central hole.

As is clearly visible in Figures 3a and 3b, therefore, the magnets M are positioned in respective housing seats 30 obtained along an inner perimeter of the main body 20, i.e. on an inner surface of the annular body and facing, in use, towards the stator (not illustrated).

Figure 3a illustrates a rotor 10 in which the lateral retention elements are all deformable elements 40 which, in accordance with a preferred aspect of the invention, have a "swallowtail" conformation, so as to have two different lateral protrusions 42 plastically deformable towards respective housing seats 30, so as to constrain respective opportunely positioned magnets M.

Figure 3b, on the other hand, illustrates a rotor in which the lateral retention elements comprise both deformable elements 40 and rigid elements 50, which are preferably arranged alternating with each other along the inner perimeter of the main body 20.

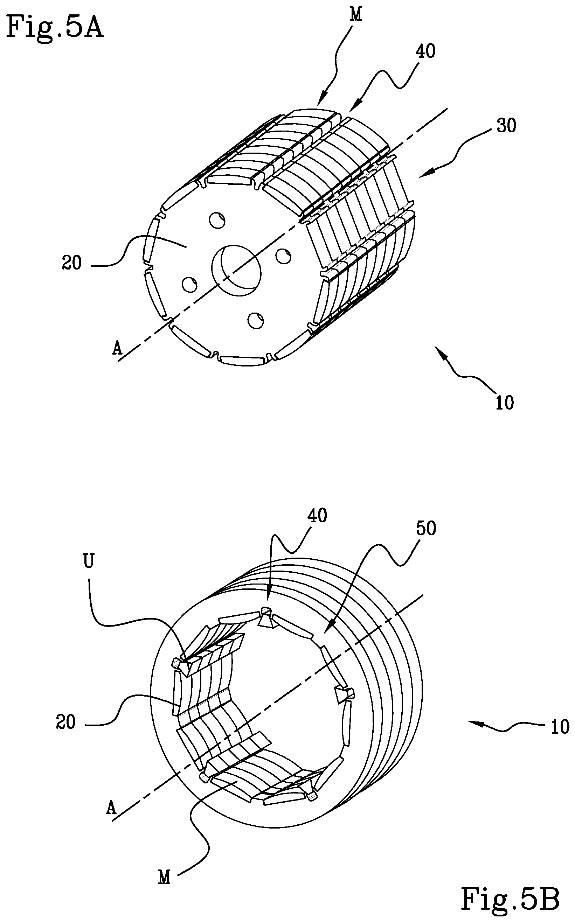

In accordance with a possible aspect of the invention illustrated in Figures 5a and 5b, the main body 20 can be made of a plurality of lamina sheets stacked on each other along the rotation axis A, so that the lateral retention devices and housing seats 30 of each lamina sheet are aligned with each other in order to obtain a cylindrical rotor similar to the one illustrated in the appended figures. Consequently, the final length of the rotor 10 depends on the number of lamina sheets stacked on each other.

The present invention also relates to a method for manufacture of a rotor 10 for a motor of the SPM type.

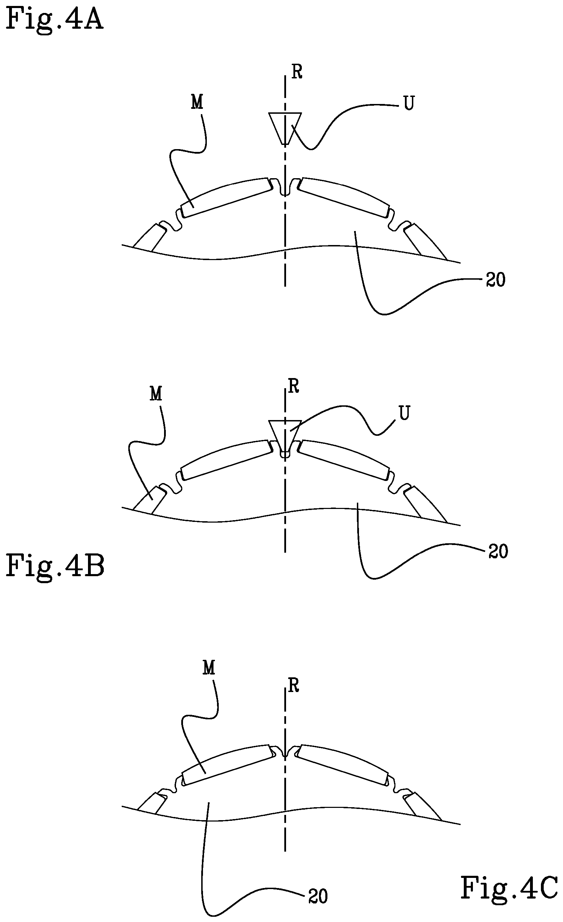

In particular, Figures 4a to 4c schematise the main operating steps of said method, i.e.:
- preparing a main body 20 of a rotor 10 configured to rotate around its own rotation axis A and also having a substantially circular perimeter. The main body 20 has a plurality of housing seats 30 obtained along the perimeter to receive a corresponding plurality of magnets M. In addition, the main body 20 comprises a plurality of lateral retention devices arranged along the aforesaid perimeter and interspersed with the housing seats 30 to delimit them laterally. The lateral retention devices comprise deformable elements 40 normally configured in an initial position, such as to allow a magnet M to be freely inserted into and/or removed from the corresponding housing seat;
- preparing a magnet M in a respective housing seat 30 (Figure 4a);
- imparting with a specific tool U a pressing force against the deformable elements 40 adjacent to the magnet M in the housing seat 30, to deform said deformable elements 40 plastically from the initial position to a locking position to constrain the corresponding magnet M inside the housing seat 30 through mechanical interference (Figure 4b), so as not to use additional elements configured to maintain the deformable elements 40 in the locking position and that - said additional elements
- could significantly change the magnetic field lines and/or form eddy currents such as to reduce the efficiency of the motor.

Figure 4c therefore illustrates the rotor 10 on which the magnets M have been constrained in position in the respective housing seats 30. Figure 4c shows more clearly the plastic deformation performed on the deformable elements 40 (more precisely, on the lateral protrusions 42) by the tool U to partially overlie the lateral portions of the magnets M and therefore hold them in position through mechanical interference.

Preferably, the steps of preparation of the magnet M and plastic deformation with the tool U are performed the number of times necessary for locking the predetermined number of magnets M in the specific housing seats 30.

In accordance with a first aspect of the aforesaid method, the aforesaid steps can be performed in any succession. For example, it is possible to position all the magnets M and subsequently plastically deform all the deformable elements 40 needed to fix the magnets M in the respective housing seats 30. Preferably, the embodiments illustrated in Figures 1a, 1b and 3a require all the plastic deformations of the flexible elements to be performed simultaneously, so as to maintain the correct alignment of the magnets M inside the respective housing seats 30 and also a constant spacing between the magnets M.

Otherwise, it is possible to follow each step of positioning a magnet M with a step of plastic deformation of the corresponding deformable element 40.

For example, the embodiments illustrated in Figures 2a, 2b and 3b can provide for the performance of plastic deformation operations with different timings, not necessarily simultaneous.

In the case in which the deformable elements 40 have a pair of lateral protrusions 42 (i.e., a substantially "swallowtail" conformation), it is preferable to position two magnets M in the two adjacent housing seats 30, so as to constrain such magnets M in the respective housing seats 30 with a single movement of the tool U, for example a pressing wedge.

If the lateral retention elements were to comprise both deformable elements 40 and rigid elements 50, the step of preparing the magnet M in the housing seat 30 provides for abutment of the magnet M in the recess formed by the conformation of said rigid element 50 and the housing seat 30 and, subsequently, plastically deforming the corresponding deformable element 40 in the locking position so as to stably constrain the magnet M.

Therefore, the movement of inserting the magnet M provides for a rotational-translational movement of the magnet M, which is first pointed against the fixed element 50 at the counter-shaped portion thereof and then made to rotate to enter into the housing seat 30. In fact, for as long as the deformable elements 40 are in the initial position, the housing seats 30 have a slight ease useful for allowing the free movement (insertion and/or removal) of the magnet M inside them.

Preferably, the step of plastic deformation of each deformable element 40 provides for plastically deforming the deformable element 40 for its entire length, i.e. for the entire length of the rotor 10 (parallel to the rotation axis A).

Alternatively, the magnets M can be fixed by means of a partial deformation of the deformable elements 40, which are therefore plastically deformed in the locking position only at several points/segments thereof along the main body 20 of the rotor 10, as would be obtained with a punching operation.

## Claims

1. A rotor (10) for a motor of the SPM type comprising:
- a main body (20) configured to rotate around its own rotation axis (A) and having a substantially circular conformation;
- a plurality of housing seats (30) obtained along a perimeter of said main body (20) turned towards a stator of the motor to receive a corresponding plurality of magnets;
- a plurality of magnets (M) arranged in said housing seats (30);
- a plurality of lateral retention devices arranged along said perimeter and interspersed with said housing seats (30) to delimit them laterally,
wherein said lateral retention devices comprise deformable elements (40) configured to be able to be deformed plastically between an initial position, in which a magnet (M) is freely insertable into or removable from the corresponding housing seat (30), and a locking position, in which at least said deformable elements (40) are configured to constrain a magnet (M) inside the corresponding housing seat (30) through mechanical interference.
wherein said rotor (10) has no additional elements configured to maintain the deformable elements (40) in the locking position and that could significantly change the magnetic field lines and/or form eddy currents such as to reduce the efficiency of the motor.

2. The rotor (10) according to claim 1, wherein said lateral retention devices and said main body (20) are made as a single body.

3. The rotor (10) according to claim 1 or 2, wherein each deformable element (40) in the locking position is configured to extend, at least in part, above a housing seat (30) adjacent to it, so as to retain in position through mechanical interference the corresponding magnet (M) contained in it.

4. The rotor (10) according to any one of the preceding claims, wherein each deformable element (40) has a central depression (41) adapted to define two lateral protrusions (42) plastically flexible and extending, in the initial position, substantially along a corresponding radial direction (R) passing through said rotation axis (A) of said main body (20).

5. The rotor (10) according to any one of the preceding claims, wherein said lateral retention devices comprise rigid elements (50) adapted to define a lateral abutment for the magnets (M) arranged in the respective housing seats (30).

6. The rotor (10) according to claim 5, wherein said rigid elements (50) and said deformable elements (40) are arranged alternating along said perimeter.

7. The rotor (10) according to claim 5 or 6, wherein said rigid elements (50) have a trapezoidal transverse section with respect to said rotation axis (A) so as to extend, at least in part, above each housing seat (30) to which they are adjacent.

8. The rotor (10) according to any one of claims 5 to 7, wherein said rigid elements (50) have a height substantially equal at most to the one of said magnets (M).

9. The rotor (10) according to any one of the preceding claims, wherein said housing seats (30) have the same extension along said perimeter.

10. The rotor (10) according to any one of the preceding claims, wherein said housing seats (30) are arranged radially equidistant along said perimeter.

11. The rotor (10) according to any one of the preceding claims, wherein said main body (20) is composed of a plurality of sheets piled on one another along said rotation axis (A) so that said lateral retention devices and said housing seats (30) are aligned with each other.

12. A motor of the SPM type comprising a rotor (10) according to any one of claims 1 to 11.

13. A method for manufacture of a rotor (10) for a motor of the SPM type comprising the operating steps of:
- preparing a main body (20) of a rotor (10) configured to rotate around its own rotation axis (A) and having a substantially circular conformation, said main body (20) having a plurality of housing seats (30) obtained along a perimeter of the main body (20) turned towards a stator of the motor to receive a corresponding plurality of magnets (M), said main body (20) further comprising a plurality of lateral retention devices arranged along said perimeter and interspersed with said housing seats (30) to delimit them laterally, wherein said lateral retention devices comprise deformable elements (40) normally configured in an initial position, in which a magnet (M) is freely insertable into or removable from the corresponding housing seat (30);
- preparing a magnet (M) in a respective housing seat (30);
- imparting with a specific tool a pressing force against said deformable elements (40) adjacent to said magnet (M) in said housing seat (30) to deform said deformable elements (40) plastically from the initial position to a locking position to constrain the corresponding magnet (M) inside the housing seat (30) through mechanical interference, so as not to use additional elements configured to maintain said deformable elements (40) in the locking position and that could significantly change the magnetic field lines and/or form eddy currents such as to reduce the efficiency of the motor.
